# EUROPEAN PATENT APPLICATION

(11) **EP 2 416 290 A1**
(43) Date of publication of application: **08.02.2012**
(21) Application number: 10758531.7
(22) Date of filing: 25.03.2010
(51) Int. Cl.: G06Q 50/00

(54) **POSITION INFORMATION ANALYSIS DEVICE AND POSITION INFORMATION ANALYSIS METHOD**

(30) Priority: 01.04.2009 JP 2009089152
(71) Applicant: NTT DOCOMO, INC., Chiyoda-ku Tokyo 100-6150 (JP)
(72) Inventor: NAGATA Tomohiro, Tokyo 100-6150 (JP); OKAJIMA Ichiro, Tokyo 100-6150 (JP); KAWAKAMI Hiroshi, Tokyo 100-6150 (JP); JO Manhee, Tokyo 100-6150 (JP); OCHI Daisuke, Tokyo 100-6150 (JP); SUZUKI Toshihiro, Tokyo 100-6150 (JP); KOBAYASHI Motonari, Tokyo 100-6150 (JP); OYABU Yuki, Tokyo 100-6150 (JP)
(74) Representative: Viering, Jentschura & Partner
(86) International application number: PCT/JP2010/055234
(87) International publication number: WO 2010/113758

(57) **Abstract**

An object of the present invention is to effectively analyze location information of a large number of users that is obtained easily and to quickly collect data with regard to macroscopic user tendencies. A location information analysis device (600) includes: an input module (601) that is adapted to input point data across a plurality of time points with regard to a plurality of users, the point data including location information indicating a position of a user, time information indicating time at which the location information is obtained, and user identifier information with regard to the user; a haunt area extraction module (602) that extracts an area, as a haunt area where the plurality of users frequently haunt, the area in which the point data is concentrated at or more than a predetermined level, based on a distribution status of the input point data plotted on two dimensional map data; and a storage module (603) that stores the extracted haunt area information.

## Description

### Technical Field

The present invention relates to a location information analysis device and a location information analysis method for performing an analysis of user tendencies (for example, extracting a haunt area of a user) based on location information of a mobile station that is carried by the user.

### Background Art

Conventionally, in response to location information of an individual user, some technologies providing various services (provision of information etc.) have been proposed. Patent Document 1, for example, proposes a technology in which a server apparatus creates a list of destinations corresponding to the current position of a user (a list of positions that were selected as destinations by a large number of users who were in the position in the past), and provides the user with the created list.

### Citation List

### Patent Literature

Patent Literature 1: Japanese Patent Application Laid-Open Publication No. 2007-110341
Patent Literature 2: Japanese Patent Application Laid-Open Publication No. 2002-44008

### Summary of Invention

### Technical Problem

Traditionally, although a lot of technologies that provide services to an individual user in response to the location information of the users have been proposed, a technology that macroscopically analyzes the location information of a large number of users and collects data on the users' tendencies has rarely proposed.

On the other hand, since consumer preference has been diversified and complicated recently, the needs of analysis data with regard to macroscopic user tendencies with regard to a large number of users without an area limitation have increased to a large extent.

However, to collect data with regard to macroscopic user tendencies in a conventional way, it has been required to do a series of extreme time-consuming work such as sending questionnaires to a lot of users, gathering the questionnaires from the users, and collecting the data by using a plenty of man-power. Moreover, it has been forced the users to bear the burden to answer and send back the questionnaires. That is, traditionally, it has been quite troublesome just gathering data with regard to macroscopic user tendencies, making it very difficult to collect the related data promptly.

In the light of the problem described above, an object of the present invention is to effectively analyze location information easily obtained of a large number of users and to quickly collect data with regard to macroscopic user tendencies.

### Solution to Problem

A location information analysis device according to one aspect of the present invention includes: an input module that is adapted to input point data across a plurality of time points with regard to a plurality of users, the point data including location information indicating a position of a user, time information indicating time at which the location information is obtained, and user identifier information with regard to the user; a haunt area extraction module that extracts an area, as a haunt area where the plurality of users frequently haunt, the area in which the point data is concentrated at or more than a predetermined level, based on a distribution status of the input point data plotted on two dimensional map data; and a storage module that stores extracted haunt area information.

As "the point data" here, it is possible to adopt GPS positioning data gained through a GPS positioning system or OPS data. It should be noted that the OPS data does not include specific location information (latitude and longitude information). In this manner, for example, it is possible to obtain point data from the OPS data by assuming that the user is in the gravity position of the area and converting the area information of the user to the location information (latitude and longitude information) of the gravity position in the area.

As described above, with the point data which is obtained relatively easily, the input module inputs the point data across a plurality of time points with regard to a plurality of users. Then, the haunt area extraction module extracts an area, as a haunt area (an area where a plurality of users frequently haunt), the area in which the point data is concentrated at or more than a predetermined level, based on a distribution status of the input point data plotted on the two dimensional map data. In addition, the storage module stores the extracted haunt area information. In this way, with the location information analysis device according to one aspect of the present invention, it is possible to effectively analyze location information with regard to a large number of users that is obtained easily and to quickly collect haunt area information as data with regard to macroscopic user tendencies.

It should be noted that four embodiments can be exemplified for an extraction procedure of haunt areas depending on whether the point data is classified for each user or not, and whether an extraction procedure based on a point data density or an extraction procedure based on grouping of point data is executed. The four embodiments as exemplary configurations of the haunt area extraction module will be described below.

That is, the haunt area extraction module may include: an all-user density estimation module that estimates density of the input point data of all the users in each of a plurality of zones partitioned on the two dimensional map data in advance; and a first extraction module that extracts an area, as the haunt area, the area in which the estimated density of the point data of all the users is equal to or more than a predetermined level.

Alternatively, the haunt area extraction module may include: a grouping module that calculates a distance between the input point data of all the users plotted on the two dimensional map data, and makes a group of point data of which calculated distance is equal to or less than a predetermined reference distance; and a second extraction module that extracts an area, as the haunt area, including a plurality of pieces of grouped point data on the two dimensional map data.

Alternatively, the haunt area extraction module may include: a classification module that classifies the input point data of all the users for each user; a per-user density estimation module that estimates density of the point data for each user based on the classified point data for each user in each of a plurality of zones partitioned on the two dimensional map data in advance, a summation module that totals the estimated density of the point data for each user in each zone and obtains density of the point data of all the users in each zone, and a third extraction module that extracts an area, as the haunt area, the area in which the obtained density of the point data of all the users is equal to or more than a predetermined level.

Alternatively, the haunt area extraction module may include: a classification module that classifies the input point data of all the users for each user, a per-user grouping module that calculates a distance between the classified point data for each user plotted on the two dimensional map data, and makes a group of point data of which calculated distance is equal to or less than a predetermined reference distance; an overlaying module that overlays an area including a plurality of pieces of grouped point data for each user on the two dimensional map data on the two dimensional map data for all the users; and a fourth extraction module that extracts an area, as the haunt area, that is obtained through the overlaying.

In addition, the location information analysis device according to one aspect of the present invention may further include: a concatenation module that classifies the input point data of all the users for each user and concatenates the point data for each user with the extracted haunt area on the two dimensional map data; a translocation history derivation module that obtains translocation history information between haunt areas for each user with the data concatenating the point data for each user with the haunt area on the two dimensional map data obtained through the concatenation based on time sequential transition with regard to relative positions of the point data for each user for the haunt area; and a travel derivation module that integrates the translocation history information between the haunt areas for each of all the users and obtains travel information between the haunt areas with regard to all the users, based on the obtained translocation history information between the haunt areas of all the users, and the storage module may further store travel information between the haunt areas with regard to all the users. In this case, the concatenation module can classify the input point data of all the users for each user and concatenate the point data for each user and the haunt area on the two dimensional map data, and the translocation history derivation module can obtain the translocation history information between the haunt areas for each user with the data concatenating the point data for each user with the haunt area on the two dimensional map data obtained through the concatenation, based on the time sequential transition with regard to relative positions of the point data for each user for the haunt areas. Furthermore, the travel derivation module integrates the translocation history information between the haunt areas for each of all the users and obtains the travel information between the haunt areas of all the users, based on the obtained translocation history information between the haunt areas of all the users, and the storage module stores the travel information between the haunt areas with regard to all the users. In this way, it is possible to further quickly collect the travel information between the haunt areas with regard to all the users as data about macroscopic user tendencies.

Alternatively, the location information analysis device according to one aspect of the present invention may further include: a concatenation module that classifies the input point data of all the users for each user and concatenates the point data for each user with the extracted haunt area on the two dimensional map data; a staying time derivation module that calculates staying time for each user with regard to each haunt area with the data concatenating the point data for each user with the haunt area on the two dimensional map data obtained through the concatenation, based on the time information of the point data of the user located in each haunt area; and a staying time statistic derivation module that integrates staying time information obtained for each user with regard to each haunt area for all the users and calculates predetermined statistics for all the users with regard to the staying time for each haunt area based on the obtained staying time information for all the users, and the storage module may store the predetermined statistics for all the users with regard to the staying time for each haunt area. In this case, the concatenation module can classify the input point data of all the users for each user and concatenate the point data for each user with the extracted haunt area on the two dimensional map data, and the staying time derivation module can calculate staying time for each user with regard to each haunt area with the data concatenating the point data for each user with the haunt area on the two dimensional map data obtained through the concatenation, based on the time information of point data of the user located in each haunt area. Furthermore, the staying time statistic derivation module integrates the staying time information for each user with regard to each haunt area for all the users and calculates predetermined statistics for all the users with regard to the staying time for each haunt area, and the storage module stores the predetermined statistics for all the users with regard to the staying time for each haunt area. In this way, it is possible to further quickly collect the predetermined statistics with regard to the staying time with regard to all the users for each haunt area as data about macroscopic user tendencies.

In addition, the location information analysis device according to one aspect of the present invention may further include: an active time period derivation module that gains information with regard to active time periods of all users for each haunt area based on attribute data including address information of each user input from outside or stored in advance and the staying time for each user in each haunt area derived by the staying time derivation module, for a certain user, by defining a staying time in a haunt area corresponding to the address information of the user as a staying time at home and determining a time period excluding the staying time at home as an active time period of the user, thereby obtaining the active time period of each user, and by integrating information of the active time period of each user for each haunt area, and the storage module may store the information with regard to the active time periods of all the users for each haunt area. In this case, the active time period derivation module gains the active time period of all users for each haunt area based on attribute data including the address information of each user and the staying time for each user in each haunt area, for a certain user, by defining a staying time in a haunt area corresponding to the address information of the user as a staying time at home and determining a time period excluding the staying time at home as an active time period of the user, thereby obtaining the active time period of each user, and by integrating information of the active time period of each user for each haunt area. Furthermore, the storage module stores the information with regard to the active time periods of all users for each haunt area. In this way, it is possible to further quickly collect the information with regard to the active time periods of all the users for each haunt area as data about macroscopic user tendencies.

Alternatively, the location information analysis device according to one aspect of the present invention may further include: a read-out module that reads out the information stored in the storage module; and an output module that outputs the read-out information. In this case, it is possible to output and visualize a variety of information stored in the storage module.

It should be noted that the invention of the location information analysis devices can be interpreted as an invention of a location information analysis method and such method will be described as below. An invention with regard to a location information analysis method can also provide the same operations and advantageous effects as those described above.

A location information analysis method according to another aspect of the present invention is a location information analysis method performed by a location information analysis device and includes: an input step of inputting point data across a plurality of time points with regard to a plurality of users to the location information analysis device, the point data including location information indicating a position of a user, time information indicating time at which the location information is obtained, and user identifier information with regard to the user, and the point data; a haunt area extraction step of extracting an area, as a haunt area where the plurality of users frequently haunt, the area in which the point data is concentrated at or more than a predetermined level, based on a distribution status of the input point data plotted on two dimensional map data; and a storing step of storing the extracted haunt area information.

### Advantageous Effects of Invention

With the present invention, it is possible to effectively analyze location information of a large number of users that is obtained easily and to quickly collect data with regard to macroscopic user tendencies.

### Brief Description of Drawings

[Fig. 1] Fig. 1 is a diagram of the system configuration of a communication system according to an embodiment.
[Fig. 2] Fig. 2 is a functional block configuration diagram showing a location information analysis device according to the present embodiment.
[Fig. 3] Fig. 3 exemplifies various configurations of a hunt area extraction module.
[Fig. 4] Fig. 4 is a flow chart with regard to a first process.
[Fig. 5] Fig. 5 is a diagram showing various configurations of a process of hunt area extraction.
[Fig. 6] Fig. 6 is a flow chart with regard to a second process.
[Fig. 7] Fig. 7 is a flow chart with regard to a third process.
[Fig. 8] Fig. 8 is a diagram showing an example of a point data table.
[Fig. 9] Fig. 9 is a diagram showing an example of the point data table in a processing stage.
[Fig. 10] Fig. 10 is a diagram showing an example of travel information between haunt areas.
[Fig. 11] Fig. 11 is a diagram showing an example of predetermined statistics with regard to a staying time for each haunt area.
[Fig. 12] Fig. 12 is a diagram showing an example of information of an active time period with regard to each user.
[Fig. 13] Fig. 13 exemplifies a haunt area displayed on a map.
[Fig. 14] Fig. 14 exemplifies a travel (approximate flow) between haunt areas displayed on a map.
[Fig. 15] Fig. 15 exemplifies predetermined statistics with regard to the staying time associated with each haunt area displayed on a map.

### Description of Embodiments

With reference to the attached figures, an embodiment of the present invention will be described. When appropriate, identical parts will be given identical reference numerals, omitting duplicated explanations.

### [Configuration of a communication system]

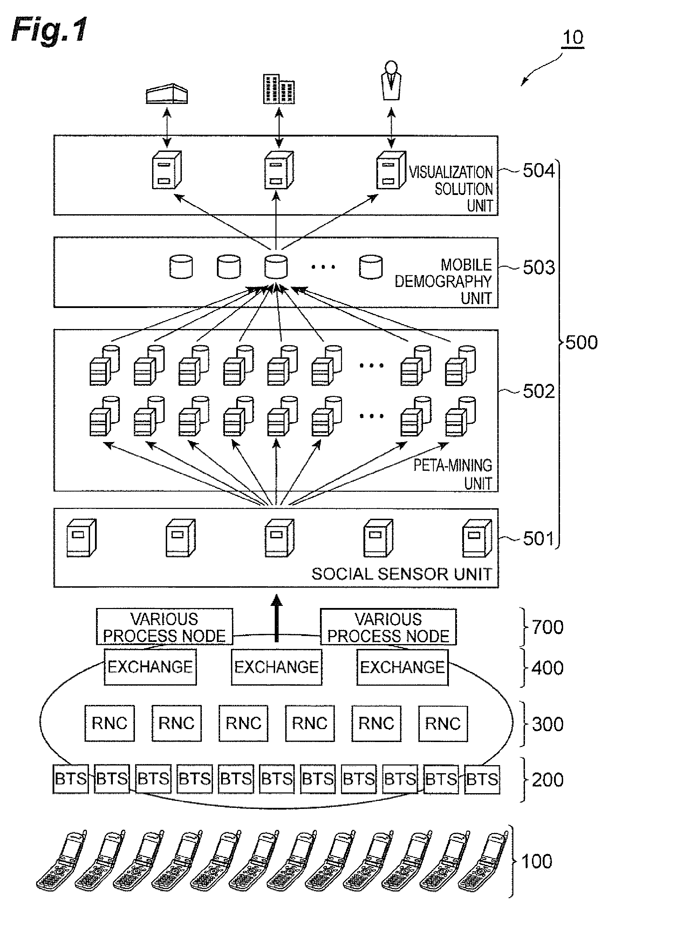

Fig. 1 is a diagram of the system configuration of a communication system 10 according to the present embodiment. As illustrated in Fig. 1, the communication system 10 includes mobile stations 100, BTSes (Base Transceiver Stations) 200, RNCs (Radio Network Controllers) 300, exchanges 400, various process nodes 700, and a management center 500. The management center 500 is configured with social sensor units 501, peta-mining units 502, mobile demography units 503, and visualization solution units 504.

The exchanges 400 collect location information of the mobile station 100 via the BTSes 200 and the RNCs 300. The RNCs 300 can make determination of the position of a mobile station 100 by using a delay value in an RRC connection request signal when a connection for communication is established with the mobile station 100. The exchanges 400 can receive the location information of the mobile station 100 determined in this way when the mobile station 100 is establishing the connection for communication. The exchanges 400 store the received location information and output the collected location information to the management center 500 every predetermined timing or in accordance with a request from the management center 500. Here, generally, the number of RNCs 300 located all over Japan is about one thousand. The number of exchanges 400 located all over Japan is about three hundreds.

The various process nodes 700 collect the location information of the mobile station 100 through the RNCs 300 and the exchanges 400, recalculate the position depending on a situation, and output the collected location information to the management center 500 every predetermined timing or in accordance with a request from the management center 500.

The management center 500 is, as described above, configured with the social sensor units 501, the peta-mining units 502, the mobile demography units 503, and the visualization solution units 504. Each of the units executes statistic processing with the location information of the mobile station 100.

Each of the social sensor units 501 is a server apparatus that collects data including the location information of the mobile station 100 from each exchange 400 and various process node 700, or off-line. The social sensor unit 501 is configured to receive data which has been regularly output from the exchanges 400 and the various process nodes 700, or to receive data in the timing set in advance by the corresponding social sensor unit 501, from the exchanges 400 and the various process nodes 700.

Each of the peta-mining units 502 is a server apparatus that converts data received from the corresponding social sensor unit 501 to a predetermined data form. The peta-mining unit 502, for example, executes a sorting process by using a user ID as a key, or executes a sorting process for each area.

Each of the mobile demography units 503 is a server apparatus that executes a totalizing process, or counting process for each item, on the data processed by the peta-mining units 502. The mobile demography unit 503, for example, can count the number of users in a specific area or totalize the distribution of areas where users are present.

Each of the visualization solution units 504 is a server apparatus that processes the data which is totalized by the mobile demography unit 503 so as to make the data visible. The visualization solution unit 504, for example, can execute a mapping process that overlays the totalized data on a map. For example, the data processed in the visualization solution unit 504 will be provided to a company, a public agency, or an individual and used for the development of a store, an investigation of traffic, disaster control, and environmental measures. It should be noted that the information statistically processed in this way is modified so as to avoid identifying an individual so that privacy would not be violated.

Furthermore, each of the social sensor units 501, the peta-mining units 502, the mobile demography units 503, and the visualization solution units 504 is, as described above, configured with a server apparatus and equipped with a basic configuration (i.e., a CPU, a RAM, a ROM, an input device such as a key board or mouse, a communication device for communication with outside, a storage device for storing information, and an output device such as a display or printer) for a general information processing apparatus not illustrated in the figures.

### [Configuration of a location information analysis device]

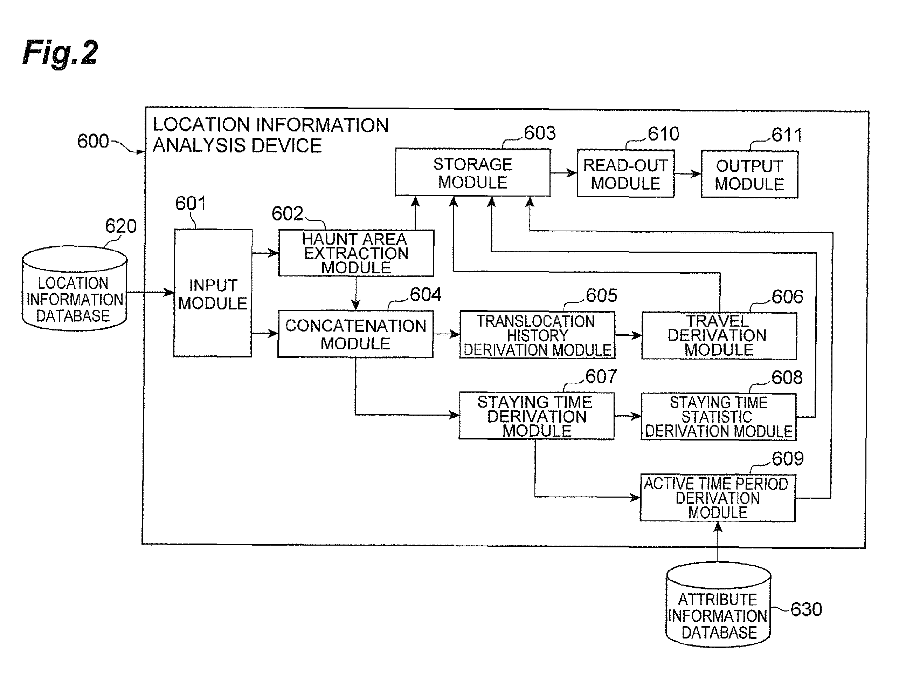

Next, a location information analysis device according to the present embodiment will be described. Fig. 2 illustrates a functional block configuration of a location information analysis device 600. The location information analysis device 600 includes, as illustrated in Fig. 2, an input module 601, a haunt area extraction module 602, a storage module 603, a concatenation module 604, a translocation history derivation module 605, a travel derivation module 606, a staying time derivation module 607, a staying time statistic derivation module 608, an active time period derivation module 609, a read-out module 610, and an output module 611. The functions of each module will be described later.

In the present embodiment, the location information is processed with a form of point data that includes location information indicating the position of a user, time information indicating the time at which the location information is obtained, and user identifier information with regard to the user. The point data across a plurality of time points with regard to a large number of users is stored in a location information database 620. Examples of the "point data" here may include GPS positioning data obtained with a GPS positioning system or OPS data. It should be noted that the OPS data does not include specific location information (latitude and longitude information). For example, it is possible to convert the area information regarding the area where a specific user is present to the location information (latitude and longitude information) of the gravity position in the area based on a presumption that the user is in the gravity position of the area, and thus obtain the point data from the OPS data. Meanwhile, user attribute information (an address, a gender, and age etc.) is stored in an attribute information database 630.

A correspondence between the logical configuration illustrated in Fig. 2 and the system configuration illustrated in Fig. 1 will be schematically described below. Here, as an example, the location information analysis device 600 corresponds to the mobile demography units 503 and the visualization solution units 504 illustrated in Fig. 1, while the location information database 620 and the attribute information database 630 correspond to the peta-mining units 502 illustrated in Fig. 1.

It should be noted that the storage module 603, the read-out module 610, and the output module 611 included in the location information analysis device 600 may alternatively correspond to the mobile demography units 503 and the visualization solution units 504 illustrated in Fig. 1, while the other configuration parts of the location information analysis device 600, the location information database 620, and the attribute information database 630 may correspond to the peta-mining units 502 illustrated in Fig. 1.

Functions of each unit of the location information analysis device 600 illustrated in Fig. 2 will be described below. The input module 601 reads out the point data across a plurality of time points with regard to a plurality of users from the location information database 620 and inputs the read-out point data to the location information analysis device 600.

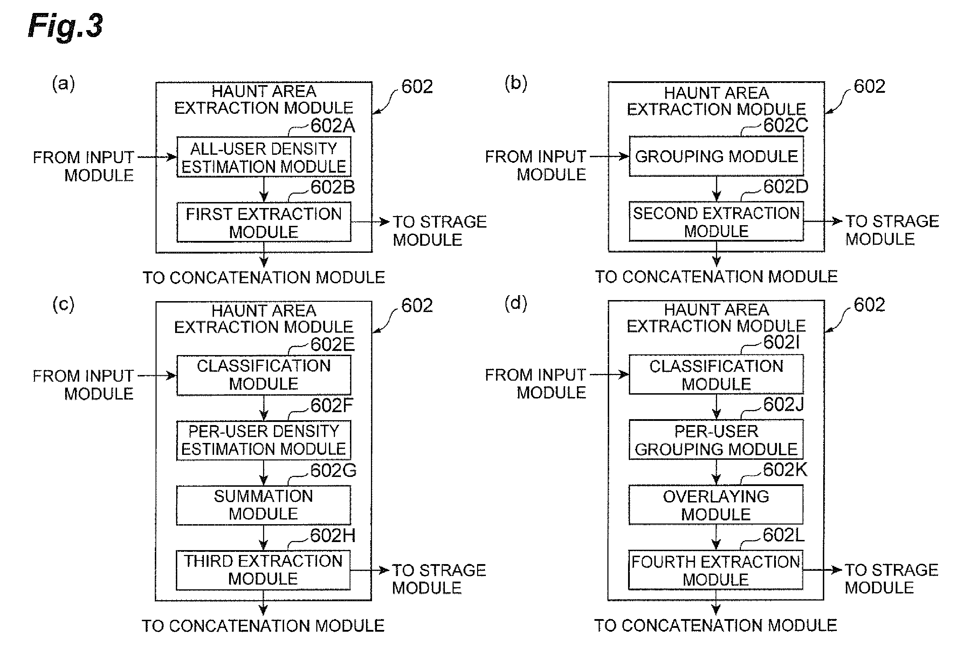

The haunt area extraction module 602 extracts an area, as a haunt area, the area in which the point data is concentrated at or more than a predetermined level, on the basis of a distribution status of the input point data plotted on two dimensional map data. Here, the "haunt area" means an area where as a trend, not individuals but a large number of users frequently visit and stay. The extraction process performed by the haunt area extraction module 602 can adopt various embodiments. Various functional block configurations illustrated in Figs. 3A to 3D can be adapted in accordance with each of the embodiments. In the present embodiment, according to whether the point data is classified for each user or not and whether an extraction procedure based on a point data density or an extraction procedure based on grouping of point data is executed, four functional block configurations (Figs. 3A to 3D) will be described below.

The haunt area extraction module 602, as illustrated in Fig. 3(a), can be configured with an all-user density estimation module 602A that estimates density of point data of all the users in each of a plurality of zones partitioned on the two dimensional map data in advance, and a first extraction module 602B that extracts an area, as a haunt area, the area in which the estimated density of point data of all the users is equal to or more than a predetermined level. This configuration corresponds to an embodiment that executes an extraction procedure based on a point data density without classifying the point data for each user.

The haunt area extraction module 602, as illustrated in Fig. 3(b), can be configured with a grouping module 602C that calculates a distance between point data of all the users plotted on the two dimensional map data, and makes a group of point data of which calculated distance is equal to or less than a predetermined reference distance, and a second extraction module 602D that extracts an area as the haunt area including a plurality of pieces of grouped point data on the two dimensional map data. This configuration corresponds to an embodiment that executes an extraction procedure based on grouping of point data without classifying the point data for each user.

The haunt area extraction module 602, as illustrated in Fig. 3(c), can be configured with a classification module 602E that classifies point data of all the users for each user, a per-user density estimation module 602F that estimates density of the classified point data for each user in each of a plurality of zones partitioned on the two dimensional map data in advance, a summation module 602G that totals the estimated density of point data for each user for each zone and obtains density of point data of all the users in each zone, and a third extraction module 602H that extracts an area, as a haunt area, the area in which the obtained density of point data of all the users is equal to or more than a predetermined level. This configuration corresponds to an embodiment that classifies the point data for each user and executes an extraction procedure based on a point data density.

The haunt area extraction module 602, as illustrated in Fig. 3(d), can be configured with a classification module 602I that classifies point data of all the users for each user, a per-user grouping module 602J that calculates a distance between the classified point data of each user plotted on the two dimensional map data, and makes a group of point data of which calculated distance is equal to or less than a predetermined reference distance for each user, an overlaying module 602K that overlays an area including a plurality of pieces of grouped point data for each user on the two dimensional map data on the two dimensional map data for all the users, and a fourth extraction module 602L that extracts an area obtained by the overlaying as a haunt area. This configuration corresponds to an embodiment that classifies the point data for each user and executes an extraction procedure based on grouping of point data.

In the four embodiments described above, the embodiment that performs density estimation on the basis of the point data classified for each user illustrated in Fig. 3(c) and the embodiment that performs grouping of point data classified for each user illustrated in Fig. 3(d) perform distributed processing for the density estimation process or grouping process, distributing a processing load. In other words, a large number of users can be divided into a plurality of groups, and the density estimation process or grouping process may be executed for the point data of divided individual target user groups.

Referring back to Fig. 2, the storage module 603 stores information that is extracted or delivered by the location information analysis device 600. The concatenation module 604 classifies point data of all the users for each user and concatenates point data for each user with the haunt areas extracted by the haunt area extraction module 602 on the two dimensional map data.

The translocation history derivation module 605 obtains translocation history information between haunt areas for each user with the data concatenating the point data for each user with the haunt area on the two dimensional map data obtained through concatenation by the concatenation module 604, on the basis of the time sequential transition with regard to relative positions of the point data for each user for the haunt areas. The travel derivation module 606 integrates the translocation history information between the haunt areas for each of all the users and calculates a travel between the haunt areas (approximate flow) with regard to all the users, on the basis of the obtained translocation history information between the haunt areas of all the users.

The staying time derivation module 607 calculates staying time for each user with regard to each haunt area with the data concatenating the point data for each user with the haunt area on the two dimensional map data obtained through the concatenation by the concatenation module 604, on the basis of the time information of point data of the user located in each haunt area. The staying time statistic derivation module 608 integrates staying time information for each user with regard to each haunt area for all the users and calculates predetermined statistics (for example, an average staying time, the longest staying time, a median of the staying time) for all the users with regard to the staying time for each haunt area based on the obtained staying time information for all the users.

The active time period derivation module 609 gains an active time period of all users on the basis of attribute data including address information of each user stored in the attribute information database 630 and the staying time for each user in each haunt area derived by the staying time derivation module 607, for a certain user, by defining a staying time in a haunt area corresponding to the address information of the user as a staying time at home and determining a time period excluding the staying time at home as an active time period of the user, thereby obtaining the active time period for each user, and by integrating information of the active time period of each user for each haunt area.

The read-out module 610 reads out information stored in the storage module 603. The output module 611 outputs the information read out by the read-out module 610.

### [Various processes executed by the location information analysis device]

Next, various processes executed by the location information analysis device 600 will be described. A first process that extracts haunt areas and derivates a travel (approximate flow) between haunt areas, a second process that extracts haunt areas, derivates statistics with regard to the staying time for each haunt area, and derivates active time period information of all users for each haunt area, and a third process that outputs stored information will be explained in the give order below.

### (First process)

Now, the first process that extracts haunt areas and derivates a travel (approximate flow) between haunt areas will be described.

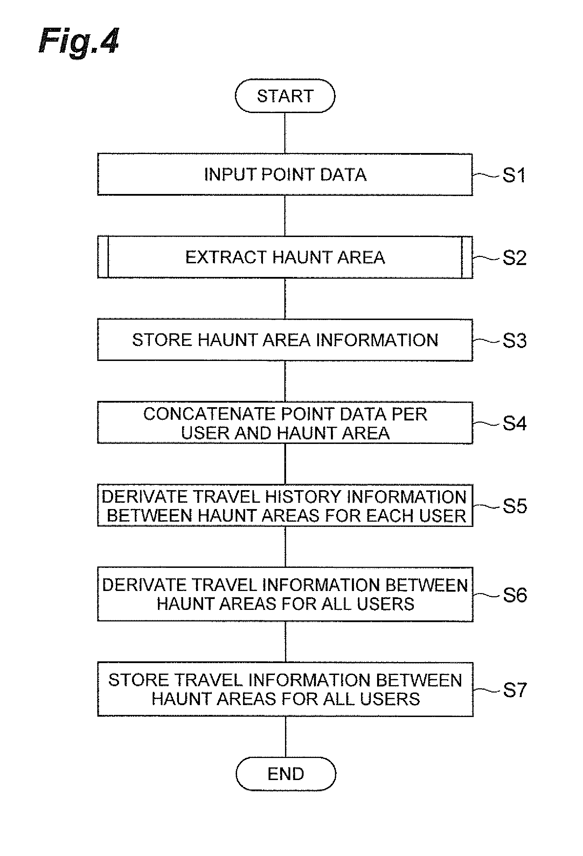

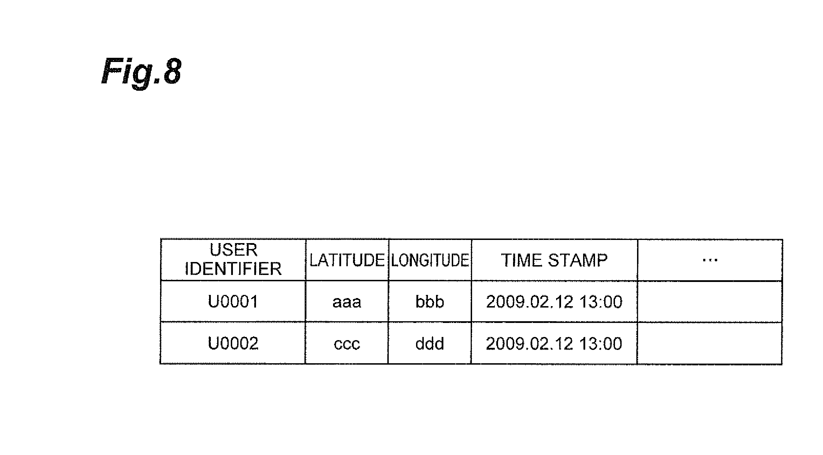

As shown in Fig. 4, the input module 601 in the location information analysis device 600 reads out point data across a plurality of time points with regard to a plurality of users from the location information database 620 and inputs the read-out point data to the location information analysis device 600 (step S1 in Fig. 4). The point data includes location information (latitude information and longitude information) indicating the position of a user, time information (time stamp) indicating the time at which the location information is obtained, and a user identifier with regard to the user. The point data, for example, is temporarily stored in the location information analysis device 600 as a point data table in a form as illustrated in Fig. 8.

Next, the haunt area extraction module 602 extracts an area, as a haunt area, the area in which the point data is concentrated at or more than a predetermined level, on the basis of a distribution status of the input point data plotted on the two dimensional map data (step S2). The extraction process of step S2 has four embodiments described above. Each of the embodiments will be described below.

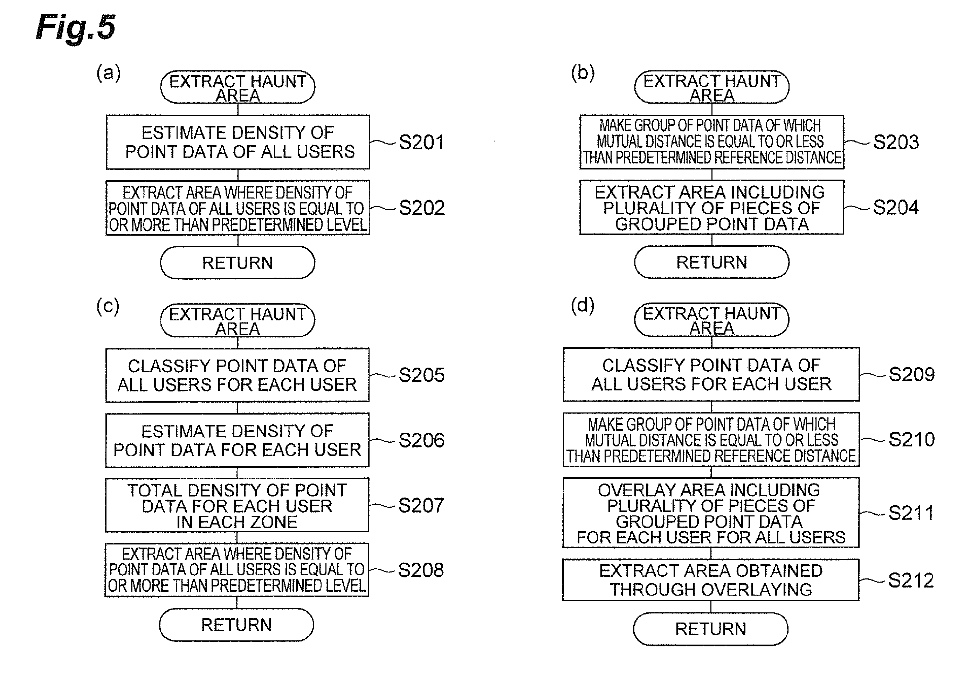

A first embodiment executes an extraction procedure based on a point data density without classifying point data for each user. In this embodiment, the haunt area extraction module 602 includes the previously stated configuration that is illustrated in Fig. 3(a). As illustrated in Fig. 5(a), the all-user density estimation module 602A estimates density of point data of all the users in each of a plurality of zones partitioned on the two dimensional map data in advance (step S201). The first extraction module 602B extracts an area, as a haunt area, the area in which the estimated density of point data of all the users is equal to or more than a predetermined level (step S202). It should be noted that, for the area division mentioned above, it is possible to divide area into a mesh with many squares or into many polygons (the same applies to the area division described later). Furthermore, in view of stability of calculation results, it is preferable to estimate the kernel density of point data as the density of point data (the same applies to the point data density estimation process described later).

A second embodiment executes an extraction procedure based on grouping of point data without classifying point data for each user. In this embodiment, the haunt area extraction module 602 includes the previously stated configuration that is illustrated in Fig. 3(b). As illustrated in Fig. 5(b), the grouping module 602C calculates a distance between point data of all the users plotted on the two dimensional map data, and makes a group of point data of which calculated distance is equal to or less than a predetermined reference distance (step S203). The second extraction module 602D extracts an area, as a haunt area, including a plurality of pieces of grouped point data on the two dimensional map data (step S204).

A third embodiment classifies point data for each user and executes an extraction procedure based on a point data density. In this embodiment, the haunt area extraction module 602 includes the previously stated configuration that is illustrated in Fig. 3(c). As illustrated in Fig. 5(c), the classification module 602E classifies point data of all the users for each user (step S205). The per-user density estimation module 602F estimates density of the classified point data for each user in each of a plurality of zones partitioned on the two dimensional map data in advance (step S206). The summation module 602G totals the estimated density of point data for each user for each zone and obtains density of point data of all the users in each zone (step S207). The third extraction module 602H extracts an area, as a haunt area, the area in which the obtained density of point data of all the users is equal to or more than a predetermined level (step S208).

A fourth embodiment classifies point data for each user and executes an extraction procedure based on grouping of point data. In this embodiment, the haunt area extraction module 602 includes the previously stated configuration that is illustrated in Fig. 3(d). As illustrated in Fig. 5(d), the classification module 6021 classifies point data of all the users for each user (step S209). The per-user grouping module 602J calculates a distance between the classified point data of each user plotted on the two dimensional map data, and makes a group of point data of which calculated distance is equal to or less than a predetermined reference distance for each user (step S210). The overlaying module 602K overlays an area including a plurality of pieces of grouped point data for each user on the two dimensional map data on the two dimensional map data for all the users (step S211). The fourth extraction module 602L extracts an area, as a haunt area, obtained through the overlaying (step S212). It should be noted that there may be some portions where areas associated to a plurality of users overlap and other portions where such areas do not overlap (area for one user) in the overlaying in step S211. In this case, for example, it is preferable to adopt an extraction procedure that extracts a half area of a portion that does not overlap (the half area nearby the border with the adjacent overlapping portion) and an area including an overlapping portion, as a haunt area.

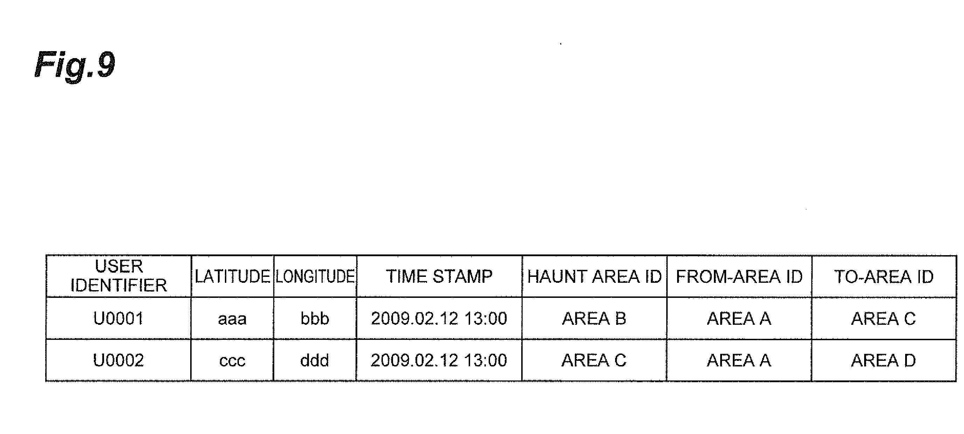

The haunt area information (a haunt area ID) obtained by the extraction process in step S2 described above, for example, as illustrated in Fig. 9, is added as one of the items of the point data table and temporarily stored in the location information analysis device 600.

In the next step S3 illustrated in Fig. 4, the storage module 603 stores the extracted haunt area information. It should be noted that, in this embodiment, the information for each user obtained in the processing stage (for example, the point data table as illustrated in Fig. 8 or Fig. 9) is stored temporarily in a work memory (not illustrated) in the location information analysis device 600 for performing the subsequent processes. However, the information for each user is not stored in the storage module 603 for performing the output process described below. That is, in step S3, the haunt area information that is not information for each user (or, information with regard to all users) is stored. Thus, in the present embodiment, the information for each user obtained in the process stage is not stored to be used for the output process, whereby a violation of privacy of individual users is prevented. It should be noted that an embodiment in which information is stored for each user may be applicable as another embodiment. In this case, however, the information for each user is omitted from targets of the output process so as not to be output.

Then, the concatenation module 604 classifies point data of all the users for each user and concatenates point data for each user with the haunt areas extracted by the haunt area extraction module 602 on the two dimensional map data (step S4).

The translocation history derivation module 605 obtains translocation history information between haunt areas for each user with the data concatenating the point data for each user with the haunt area on the two dimensional map data obtained through concatenation by the concatenation module 604, on the basis of the time sequential transition with regard to relative positions of the point data for each user for the haunt areas (step S5). For example, the haunt areas with regard to a certain user include an "area A" at 10:10, an "area B" at 10:20, 10:30, and 10:40, and an "area C" at 10:50, and the "area B" is assumed as a haunt area, the point meaning "coming from the area A" and the point meaning "going to the area C" are gained for the area B. That is, with regard to the "area B", which is a haunt area, as the travel history information between haunt areas, the "area A" is gained as a From-area since the certain user came from the area A and the "area C" is gained as a To-area since the certain user went to the area C. Hear, in the location information analysis device 600, as illustrated in Fig. 9, for example, "From-area ID" and "To-area ID" are added as items of the point data table and temporarily stored in the point data table.

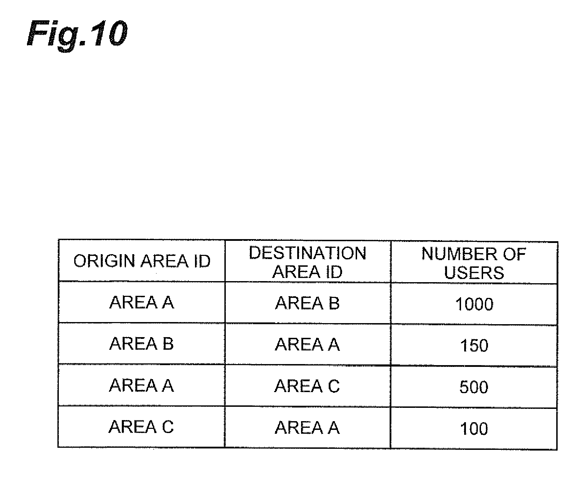

Next, the travel derivation module 606 integrates the translocation history information between the haunt areas for each of all the users and obtains a travel (approximate flow) between the haunt areas with regard to all the users, on the basis of the obtained translocation history information between the haunt areas of all the users (step S6), and the storage module 603 stores the obtained travel information between the haunt are as with regard to all the users (approximate flow information) (step S7). For example, as illustrated in Fig. 10, information that a thousand people has moved from the area A to area B, one hundred and fifty people has moved from the area B to area A, five hundred people has moved from the area A to area C, and one hundred people has moved from the area C to area A is gained as travel information between the haunt areas in the morning of a certain working day, and is stored.

With the first process described above, the haunt area information and the travel information between the haunt areas for all the users (approximate flow information) are gained and stored for the output process described later.

### (Second process)

Next, the second process that extracts a haunt area, derivates statistics with regard to the staying time for each haunt area, and derivates the active time period information of all users for each haunt area, will be described below.

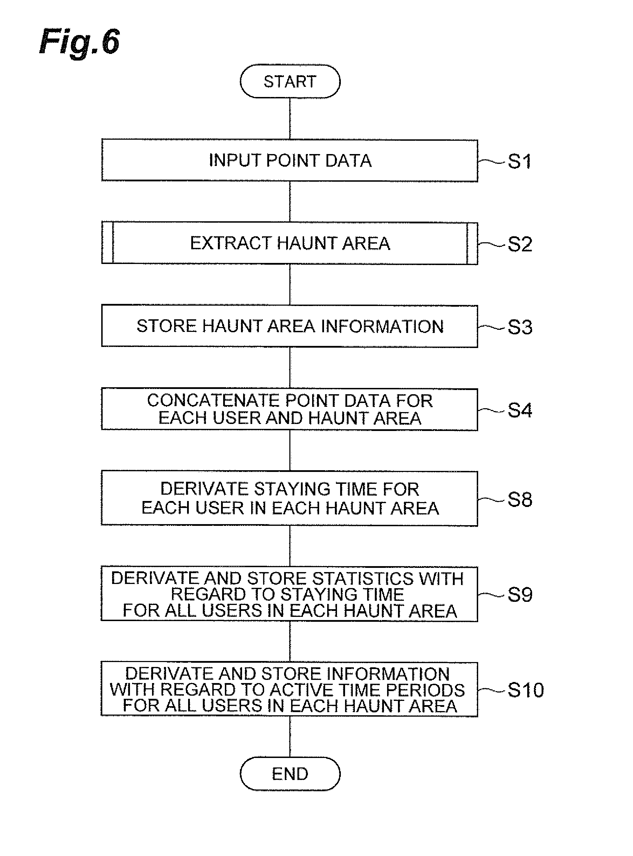

As illustrated in Fig. 6, the input module 601 in the location information analysis device 600 reads out point data across a plurality of time points with regard to a plurality of users from the location information database 620 and inputs the read-out point data to the location information analysis device 600 (step S 1 in Fig. 6).

Then, the haunt area extraction module 602 extracts an area, as a haunt area, the area in which the point data is concentrated at or more than a predetermined level, on the basis of a distribution status of the input point data plotted on the two dimensional map data (step S2). Since the extraction process of step S2 is already explained in detail in the first process, detailed explanation will be omitted here.

Next, the storage module 603 stores the extracted haunt area information (step S3). The concatenation module 604 then classifies point data of all the users for each user and concatenates point data for each user and the haunt areas extracted by the haunt area extraction module 602 on the two dimensional map data (step S4).

Then, the staying time derivation module 607 calculates staying time for each user with regard to each haunt area with the data concatenating the point data for each user with the haunt area on the two dimensional map data obtained through the concatenation by the concatenation module 604, on the basis of the time information of point data of the user located in each haunt area (step S8). For example, assuming that the haunt areas with regard to a certain user include the "area A" at 10:10, the "area B" at 10:20, 10:30, and 10:40, and the "area C" at 10:50, it can be decided that the certain user was in the "area B" from 10:20 to 10:40. Therefore, 20 minute is gained as the staying time of the user with regard to the "area B" as the haunt area.

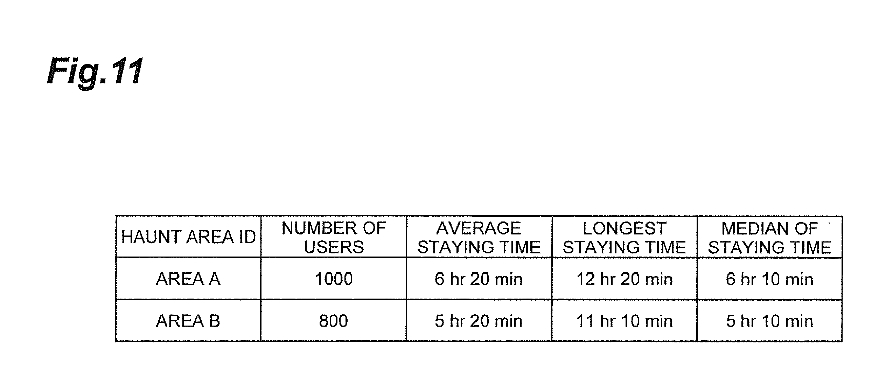

Next, The staying time statistic derivation module 608 integrates staying time information for each user with regard to each haunt area obtained by the staying time derivation module 607 for all the users and calculates predetermined statistics (for example, an average staying time, the longest staying time, a median of the staying time) for all the users with regard to the staying time for each haunt area based on the obtained staying time information for all the users. In this way, for example, as illustrated in Fig. 11, the average staying time, the longest staying time, the median of the staying time, and the total number of staying users for a certain weekday (24 hours) are gained for each haunt area, and are stored in the storage module 3.

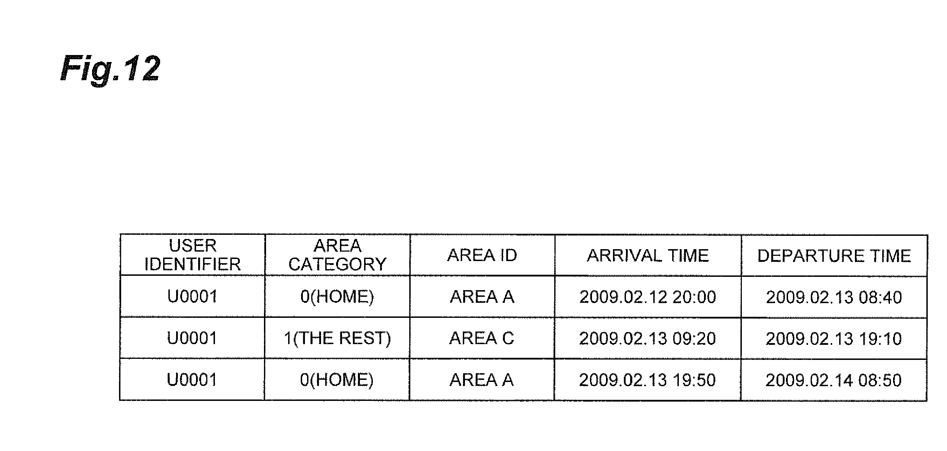

Then, in step S10, the active time period derivation module 609 obtains an active time period of each user on the basis of attribute data including address information of each user stored in the attribute information database 630 and the staying time for each user in each haunt area derived by the staying time derivation module 607, for a certain user, by defining a staying time in a haunt area corresponding to the address information of the user as a staying time at home and determining a time period excluding the staying time at home from a day time period (0 o'clock to 24 o'clock) as an active time period of the user, thereby obtaining the active time period for each user. In this way, for example, as illustrated in Fig. 12, information including an arrival time (an arrival time to the area from another area), a departure time (a departure time from the area to another area), an area category (home is "0", and the rest is "1") is gained and temporarily stored in the location information analysis device 600. In addition, the active time period derivation module 609 integrates information about the active time period with regard to each user for each haunt area, thereby obtaining information with regard to active time periods of all users for each haunt area. The information with regard to the obtained active time periods of all users for each haunt area is stored in the storage module 3.

With the second process described above, the haunt area information, the predetermined statistics for all the users with regard to the staying time for each haunt area, and the information with regard to active time periods of all users for each haunt area are gained and stored.

### (Third process)

Next, the third process that outputs the stored information will be described.

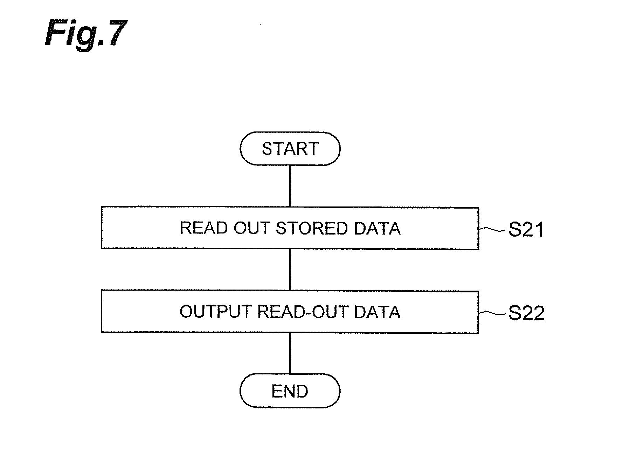

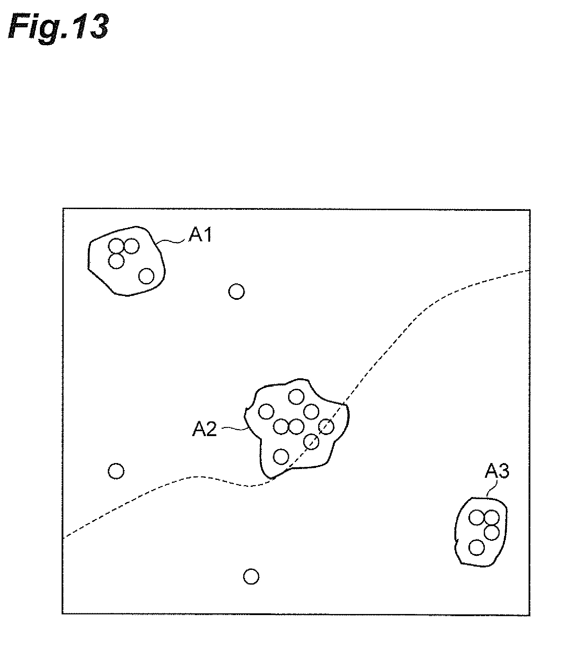

As illustrated in Fig. 7, the read-out module 610 in the location information analysis device 600 reads out the information (the information gained through the first and the second processes described above) stored in the storage module 603 (step S21). The output module 611 outputs the information read out by the read-out module 610 (step S22). The output module 611, for example, as illustrated in Fig. 13, displays haunt areas A1, A2, and A3 on the two dimensional map that is plotted with a plenty of point data. In this way, the positions of the haunt areas on the map can be easily perceived visually.

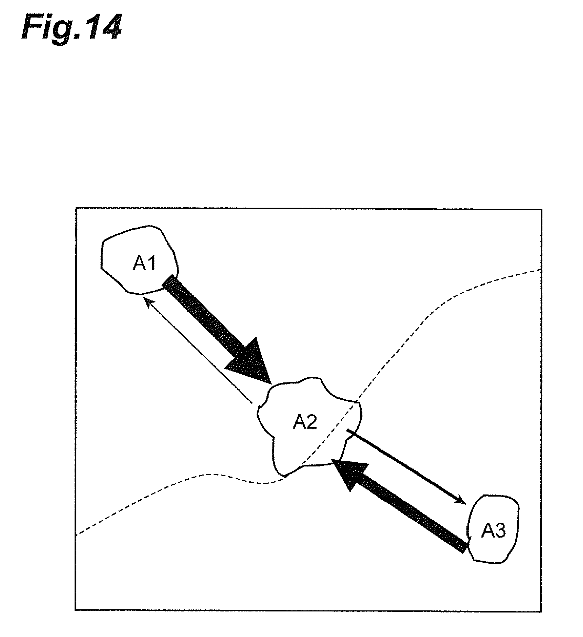

In addition, the output module 611, as illustrated in Fig. 14, may represent a translocation between haunt areas with an arrow and a corresponding travel (approximate flow) by the thickness of the arrow on the two dimensional map showing these haunt areas. In this way, the travel between haunt areas (approximate flow) can be easily perceived visually.

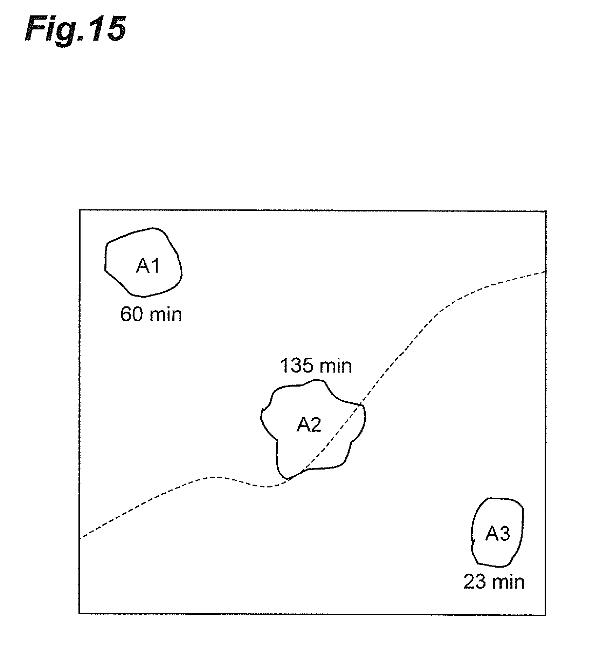

In addition, the output module 611, as illustrated in Fig. 15, may represent predetermined statistics with regard to the staying time for each haunt area (for example, an average staying time) on the two dimensional map showing the haunt areas. Furthermore, predetermined statistics with regard to the staying time for each haunt area and the information with regard to the active time period for all the users for each haunt area may be displayed in a table form.

According to the present embodiment described above, it is possible to effectively analyze location information (GPS positioning data or OPS data) of a large number of users that is obtained easily without user reactions, and quickly collect and output data with regard to macroscopic user tendencies (haunt area information, travel information between haunt areas (approximate flow information), predetermined statistics with regard to the staying time for each haunt area, information with regard to the active time periods of all users for each haunt area).

According to the present embodiment, the information for each user obtained in the process stage is not stored to be used for the output process, whereby a violation of privacy of individual users is prevented. It should be noted that information may be stored for each user. In this case, however, the information for each user is omitted from targets of the output process so as not to be output.

According to the present embodiment, data with regard to not individual user tendencies but macroscopic user tendencies is collected. Therefore, the location information to be a basis of the analyzing process is not necessarily obtained from the mobile stations of users periodically. Location information gained irregularly may be also applicable broadly.

### Reference Signs List

10... communication system, 100... mobile station, 200... BTS (Base Transceiver Station), 300... RNC (Radio Network Controller), 400... exchange, 500... management center, 501... social sensor unit, 502... peta-mining unit, 503... mobile demography unit, 504... visualization solution unit, 600... location information analysis device, 601... input module, 602... haunt area extraction module, 602A... all-user density estimation module, 602B... first extraction module, 602C... grouping module, 602D... second extraction module, 602E... classification module, 602F... per-user density estimation module, 602G... summation module, 602H... third extraction module, 602I... classification module, 602J... per-user grouping module, 602K... overlaying module, 602L... fourth extraction module, 603... storage module, 604... concatenation module, 645... translocation history derivation module, 606... travel derivation module, 607... staying time derivation module, 608... staying time statistic derivation module, 609... active time period derivation module, 610... read-out module, 611... output module, 620... location information database, 630... attribute information database, 700... various process node

## Claims

1. A location information analysis device comprising:
an input module that is adapted to input point data across a plurality of time points with regard to a plurality of users, the point data including location information indicating a position of a user, time information indicating time at which the location information is obtained, and user identifier information with regard to the user;
a haunt area extraction module that extracts an area, as a haunt area where the plurality of users frequently haunt, the area in which the point data is concentrated at or more than a predetermined level, based on a distribution status of the input point data plotted on two dimensional map data; and
a storage module that stores extracted haunt area information.

2. The location information analysis device according to claim 1, wherein
the haunt area extraction module comprises:
an all-user density estimation module that estimates density of the input point data of all the users in each of a plurality of zones partitioned on the two dimensional map data in advance; and
a first extraction module that extracts an area, as the haunt area, the area in which the estimated density of the point data of all the users is equal to or more than a predetermined level.

3. The location information analysis device according to claim 1, wherein
the haunt area extraction module comprises:
a grouping module that calculates a distance between the input point data of all the users plotted on the two dimensional map data, and makes a group of point data of which calculated distance is equal to or less than a predetermined reference distance; and
a second extraction module that extracts an area, as the haunt area, including a plurality of pieces of grouped point data on the two dimensional map data.

4. The location information analysis device according to claim 1, wherein
the haunt area extraction module comprises:
a classification module that classifies the input point data of all the users for each user;
a per-user density estimation module that estimates density of the point data for each user based on the classified point data for each user in each of a plurality of zones partitioned on the two dimensional map data in advance;
a summation module that totals the estimated density of the point data for each user in each zone and obtains density of the point data of all the users in each zone; and
a third extraction module that extracts an area, as the haunt area, the area in which the obtained density of the point data of all the users is equal to or more than a predetermined level.

5. The location information analysis device according to claim 1, wherein
the haunt area extraction module comprises:
a classification module that classifies the input point data of all the users for each user;
a per-user grouping module that calculates a distance between the classified point data of each user plotted on the two dimensional map data, and makes a group of point data of which calculated distance is equal to or less than a predetermined reference distance;
an overlaying module that overlays an area including a plurality of pieces of grouped point data for each user on the two dimensional map data on the two dimensional map data for all the users; and
a fourth extraction module that extracts an area, as the haunt area, that is obtained through the overlaying.

6. The location information analysis device according to any one of claims 1 to 5, further comprising:
a concatenation module that classifies the input point data of all the users for each user and concatenates the point data for each user with the extracted haunt area on the two dimensional map data;
a translocation history derivation module that obtains translocation history information between haunt areas for each user with the data concatenating the point data for each user with the haunt area on the two dimensional map data obtained through the concatenation based on time sequential transition with regard to relative positions of the point data for each user for the haunt area; and
a travel derivation module that integrates the translocation history information between the haunt areas for each of all users and obtains travel information between the haunt areas with regard to all the users, based on the obtained translocation history information between the haunt areas of all the users, wherein
the storage module further stores travel information between the haunt areas with regard to all the users.

7. The location information analysis device according to any one of claims 1 to 5, further comprising:
a concatenation module that classifies the input point data of all the users for each user and concatenates the point data for each user with the extracted haunt area on the two dimensional map data;
a staying time derivation module that calculates staying time for each user with regard to each haunt area with the data concatenating the point data for each user with the haunt area on the two dimensional map data obtained through the concatenation, based on the time information of the point data of the user located in each haunt area; and
a staying time statistic derivation module that integrates staying time information obtained for each user with regard to each haunt area for all the users and calculates predetermined statistics for all users with regard to the staying time for each haunt area based on the obtained staying time information for all the users, wherein
the storage module further stores the predetermined statistics for all the users with regard to the staying time for each haunt area.

8. The location information analysis device according to claim 7, further comprising
an active time period derivation module that gains information with regard to active time periods of all users for each haunt area based on attribute data including address information of each user input from outside or stored in advance and the staying time for each user in each haunt area derived by the staying time derivation module, for a certain user, by defining a staying time in a haunt area corresponding to the address information of the user as a staying time at home and determining a time period excluding the staying time at home as an active time period of the user, thereby obtaining the active time period of each user, and by integrating information of the active time period of each user for each haunt area, wherein
the storage module stores the information with regard to the active time periods of all the users for each haunt area.

9. The location information analysis device according to any one of claims 1 to 5, further comprising:
a read-out module that reads out the information stored in the storage module; and
an output module that outputs the read-out information.

10. A location information analysis method performed by a location information analysis device, the location information analysis method comprising:
an input step of inputting point data across a plurality of time points with regard to a plurality of users to the location information analysis device, the point data including location information indicating a position of a user, time information indicating time at which the location information is obtained, and user identifier information with regard to the user;
a haunt area extraction step of extracting an area, as a haunt area where the plurality of users frequently haunt, the area in which the point data is concentrated at or more than a predetermined level, based on a distribution status of the input point data plotted on two dimensional map data; and
a storing step of storing the extracted haunt area information.
